# FASCICULE DE BREVET EUROPEEN

(11) **EP 3 483 993 B1**
(45) Date de publication et mention de la délivrance du brevet: **26.02.2020**
(21) Numéro de dépôt: 18188977.5
(22) Date de dépôt: 14.08.2018
(51) Int. Cl.: H02B 1/30

(54) **SOCLE POUR ARMOIRE ELECTRIQUE**
SOCKEL FÜR SCHALTSCHRANK
BASE FOR ELECTRICAL CABINET

(30) Priorité: 09.11.2017 FR 1760530
(43) Date de publication de la demande: 15.05.2019
(73) Titulaire: Schneider Electric Industries SAS, 92500 Rueil-Malmaison (FR)
(72) Inventeur: CASTILLEJO TRIVINO, Angel, 38050 GRENOBLE (FR)
(74) Mandataire: Tripodi, Paul

(56) Documents cités:
- JP-A- 2006 013 041
- JP-A- 2015 177 147

## Description

### Domaine technique de l'invention

La présente invention se rapporte à un socle pour enveloppe électrique et à une installation électrique intégrant ledit socle.

### Etat de la technique

Une armoire électrique comporte un socle, une armature fixée sur le socle et composée de montants verticaux et horizontaux et des panneaux fixés sur les montants de l'armature.

Il est possible de juxtaposer plusieurs armoires électriques, de manière à former une enveloppe électrique globale.

De manière connue, le socle peut être unique pour une enveloppe électrique à plusieurs armoires électriques juxtaposées.

Pour une enveloppe électrique, le socle doit être particulièrement solide et rigide pour supporter l'ensemble de l'armature et tous les équipements installés dans chaque armoire composant l'enveloppe. Des socles modulaires sont déjà connus des documents JP2006013041 et JP2015177147.

Cependant, tout en ayant ces contraintes de solidité et de rigidité au niveau du socle, il est nécessaire de :
- Permettre de réaliser des socles de différentes longueurs pour s'adapter facilement au nombre d'armoires électriques à juxtaposer ;
- Limiter le nombre de pièces formant le socle pour faciliter son montage ;
- Limiter le nombre de références des éléments constitutifs du socle afin de faciliter la fabrication et l'approvisionnement ;

Le but de l'invention est donc de proposer une solution de socle modulaire permettant de remplir les objectifs cités ci-dessus.

### Exposé de l'invention

Ce but est atteint par un socle pour enveloppe électrique, ledit socle étant de forme rectangulaire et composé de plusieurs éléments d'ossature assemblés entre eux, en vue de lui conférer une longueur réglable. Caque élément d'ossature peut prendre uniquement une première configuration ou une deuxième configuration et ledit socle comporte au moins deux éléments d'ossature de ladite première configuration et chaque autre élément d'ossature est réalisé selon la deuxième configuration et est ajouté pour régler ladite longueur dudit socle.

Selon l'invention, le socle comporte plusieurs éléments d'assemblages identiques, agencés pour assurer un assemblage de chaque élément d'ossature avec un élément d'ossature adjacent.

Selon l'invention, chaque élément d'ossature comporte au moins un élément d'assemblage fixé pour lui conférer un organe d'assemblage de type mâle et agencé pour coopérer avec un organe d'assemblage de type femelle présent sur un élément d'ossature adjacent.

Selon l'invention, le socle comporte une première série de plusieurs longerons mis bout-à-bout et assemblés les uns aux autres suivant une première ligne d'assemblage et une deuxième série de plusieurs longerons mis bout-à-bout et assemblés les uns aux autres suivant une deuxième ligne d'assemblage, distincte de la première ligne d'assemblage et parallèle à celle-ci.

Selon l'invention, les éléments d'ossature sont assemblés les uns aux autres de manière à assurer une alternance de positionnement des organes d'assemblage suivant la première ligne d'assemblage et suivant la deuxième ligne d'assemblage.

Selon une réalisation particulière, un élément d'ossature selon la première configuration comporte :
- Un premier longeron et un deuxième longeron identiques et parallèles entre eux, comprenant chacun une première extrémité et une deuxième extrémité,
- Une première traverse joignant le premier longeron au deuxième longeron à leur première extrémité,
- Un élément d'assemblage pour assurer un assemblage de l'élément d'ossature avec un élément d'ossature adjacent.

Selon une autre réalisation particulière, un élément d'ossature selon la deuxième configuration comporte :
- Un premier longeron et un deuxième longeron identiques et parallèles entre eux, comprenant chacun une première extrémité et une deuxième extrémité,
- Un premier élément d'assemblage pour assurer un assemblage de l'élément d'ossature avec un premier élément d'ossature adjacent situé en amont,
- Un deuxième élément d'assemblage pour assurer un assemblage de l'élément d'ossature avec un deuxième élément d'ossature adjacent situé en aval.

Selon une autre réalisation particulière, chaque élément d'assemblage présente une forme en L comportant une première branche agencée pour se fixer dans le prolongement de la première extrémité ou de la deuxième extrémité d'un longeron d'un élément d'ossature, selon la première configuration ou la deuxième configuration.

Selon une autre réalisation particulière, l'élément d'ossature selon la première configuration est choisi parmi une architecture d'une première longueur et une architecture d'une deuxième longueur, distincte de la première longueur, et en ce que ces deux longueurs sont choisies pour permettre de couvrir plusieurs longueurs de socle suivant une progression linéaire.

L'invention concerne également une installation électrique comprenant plusieurs armoires électriques juxtaposées et un socle de support desdites armoires électriques, le socle étant tel que défini ci-dessus, sa longueur étant réglée en fonction du nombre d'armoires électriques à juxtaposer.

### Brève description des figures

D'autres caractéristiques et avantages vont apparaître dans la description détaillée qui suit faite en regard des dessins annexés dans lesquels :
- La figure 1 représente une enveloppe électrique à plusieurs armoires électriques juxtaposées, munie d'un socle conforme à l'invention ;
- Les figures 2A et 2B représentent un élément d'ossature employé dans le socle de l'invention, selon une première configuration ;
- Les figures 3A et 3B représentent un élément d'ossature employé dans le socle de l'invention, selon une deuxième configuration ;

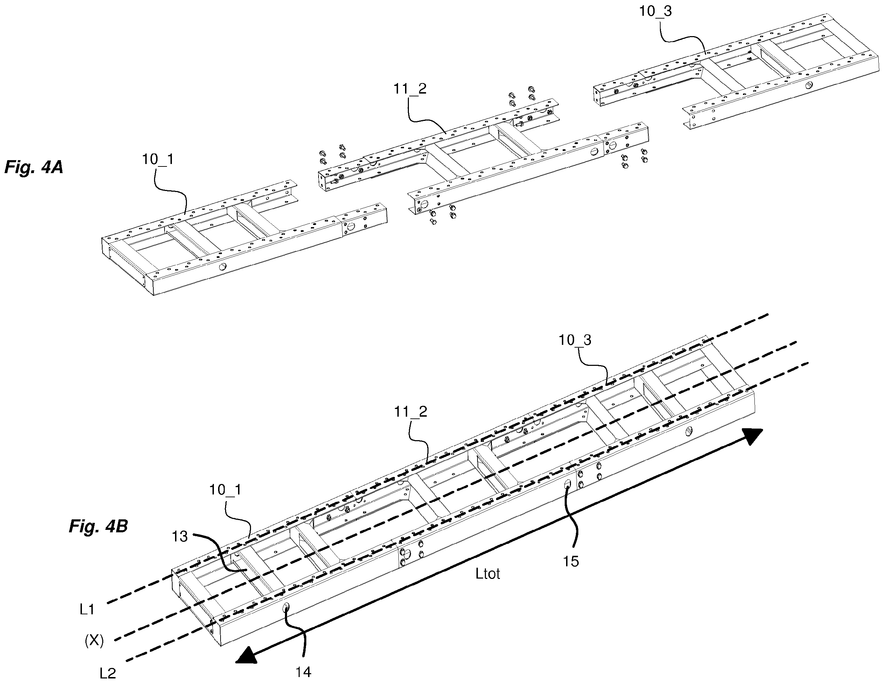

- Les figures 4A et 4B illustrent le principe d'assemblage d'un socle à trois éléments d'ossature, conformément au principe de l'invention ;
- La figure 5 illustre plusieurs architectures de socle, conformément à l'invention ;
- La figure 6 représente un diagramme illustrant la gamme de longueurs choisies pour chacun des deux éléments d'ossature ;
- La figure 7 illustre le principe qui permet de rigidifier la structure du socle ;

### Description détaillée d'au moins un mode de réalisation

Pour la suite de la description, on définit un axe (X) tracé dans le sens de la longueur du socle.

L'invention concerne un socle 1 pour une enveloppe électrique 2. Le socle et l'enveloppe électrique peuvent faire partie d'une installation électrique globale.

Le socle 1 est destiné à reposer sur un sol plan, l'armature de l'enveloppe étant alors montée perpendiculairement au plan formé par le sol.

Le socle 1 est de forme finale (une fois montée) rectangulaire. Pour la suite de la description, on parlera ainsi de la longueur Ltot du socle et de la largeur Itot du socle, sa longueur étant plus importante que sa largeur. Lorsque le socle est posé sur le sol, la largeur du socle correspond à la profondeur de l'installation.

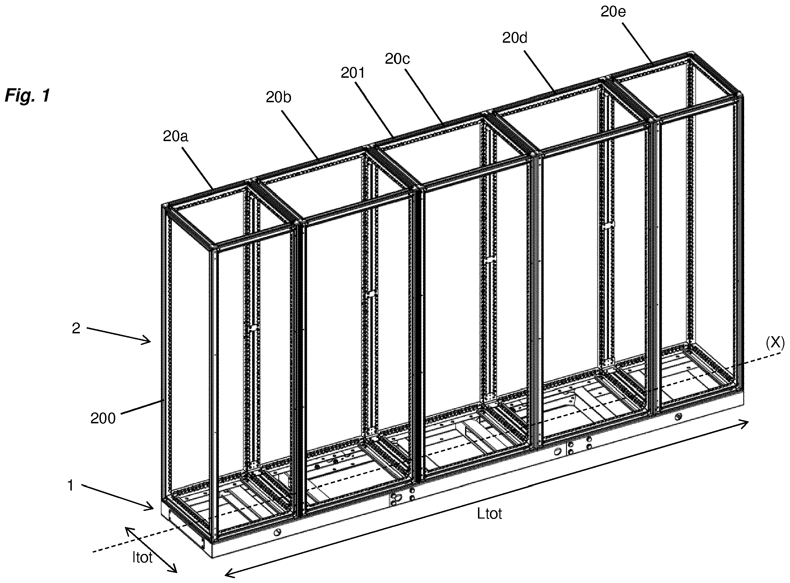

En référence à la figure 1, une enveloppe électrique 2 peut comporter une ou plusieurs armoires électriques 20a, 20b, 20c, 20d, 20e (référence 20 de manière générale) juxtaposées et contigües, dans le sens de la longueur du socle. Le nombre d'armoires illustrées sur la figure 1 n'est pas limitatif.

Le socle 1 présente une largeur Itot constante et une longueur Ltot modulable selon le nombre d'armoires électriques 20 juxtaposées qui composent l'enveloppe 2.

Un tel socle 1 est destiné à supporter l'armature de l'enveloppe électrique 2. Comme représenté sur la figure 1, une telle armature comporte plusieurs montants verticaux 200 fixés sur le socle 1 et des montants transversaux 201. Des panneaux (non représentés) sont ensuite fixés sur les montants de l'armature.

Il est utile de proposer un socle 1 modulable en longueur Ltot de manière à s'adapter à la taille de l'enveloppe à installer.

Suivant sa longueur, le socle 1 présente ainsi deux lignes d'assemblage (définies par L1 et L2 sur les figures annexées) parallèles entre elles et à l'axe (X), désignées ci-après première ligne d'assemblage L1 et deuxième ligne d'assemblage L2. Entre ses deux lignes d'assemblage, le socle 1 comporte plusieurs traverses.

Selon un aspect de l'invention, le socle 1 est composé de plusieurs éléments d'ossature 10_i, 11_i assemblés entre eux. Entre deux éléments d'ossature fixés entre eux, on définit un plan de jonction perpendiculaire au sol et formant la jonction d'un élément d'ossature avec l'élément d'ossature adjacent.

Pour la suite de la description, on considère que le socle 1 est réalisé par l'assemblage de n éléments d'ossature 10_i, 11_i mis bout à bout. Chaque élément d'ossature 10_i, 11_i est défini par un rang désigné i, dans lequel i va de 1 à n et avec n supérieur ou égal à 2.

Le nombre d'éléments d'ossature employés et mis bout-à-bout, et éventuellement leur longueur respective, permet de régler la longueur du socle 1.

Chaque élément d'ossature 10_i, 11_i est formé de profilés métalliques fixés entre eux, par soudage ou vissage. Chaque profilé présente une section transversale en U. Lorsque le socle 1 est posé sur le sol, sa section en U est symétrique par rapport à un plan parallèle au sol et le creux formé par le U est orienté vers l'intérieur.

Chaque élément d'ossature 10_i, 11_i ne peut prendre que deux configurations ou structures distinctes.

Le socle comporte deux éléments d'ossature 10_i de la première configuration. Les autres éléments d'ossature 11_i qui peuvent être ajoutés sont de la deuxième configuration. Ces autres éléments d'ossature sont optionnels.

Quel que soit n supérieur ou égal à 2, l'élément d'ossature 10_1 de rang 1 et l'élément d'ossature 10_n de rang n sont toujours réalisés selon la première configuration.

Lorsque n est strictement supérieur à 2, chaque élément d'ossature 11_i ajouté aux rangs 2 à n-1 est réalisé selon la deuxième configuration.

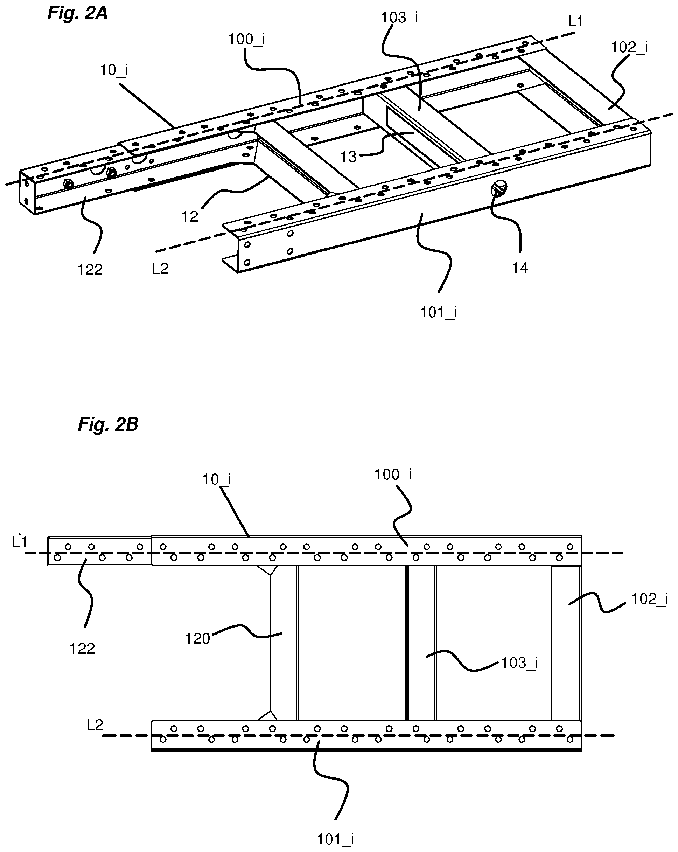

En référence aux figures 2A et 2B, un élément d'ossature 10_i selon la première configuration présente une forme générale en C.

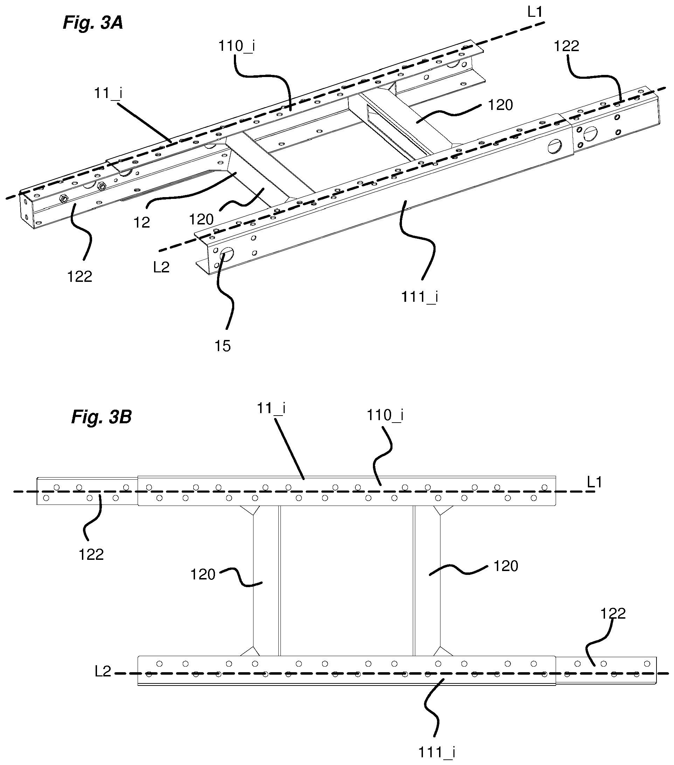

En référence aux figures 3A et 3B, un élément d'ossature 11_i selon la deuxième configuration présente une forme générale en H.

Selon la première configuration, un élément d'ossature 10_i comporte un premier longeron 100_i et un deuxième longeron 101_i. Le premier longeron 100_i et le deuxième longeron 101_i sont de longueur identique. Chaque longeron comporte une première extrémité et une deuxième extrémité. Le premier longeron et le deuxième longeron sont agencés en parallèle et reliés entre eux par une traverse 102_i reliant leur première extrémité et formant la portion centrale du C. Le premier longeron est destiné à être dans la première ligne d'assemblage L1 du socle et le deuxième longeron est destiné à être dans la deuxième ligne d'assemblage L2 du socle. Cet élément d'ossature 10_i peut également comporter une traverse 103_i intermédiaire.

Selon la deuxième configuration, un élément d'ossature 11_i comporte un premier longeron 110_i et un deuxième longeron 111_i. Le premier longeron et le deuxième longeron sont de longueur identique. Les deux longerons sont agencés en parallèle. Le premier longeron est destiné à être dans la première ligne d'assemblage L1 du socle et le deuxième longeron est destiné à être dans la deuxième ligne d'assemblage L2 du socle.

Dans un même socle, les traverses sont ajustées pour assurer une largeur Itot constante audit socle 1.

Pour se fixer entre eux, chaque élément d'ossature 10_i, 11_i comporte un ou plusieurs éléments d'assemblage 12, agencés pour assurer une liaison mécanique d'un élément d'ossature avec un autre élément d'ossature.

L'élément d'ossature 10_1 de rang 1 est assemblé avec l'élément d'ossature 10_2 de rang 2.

Lorsque n est supérieur à 2, pour i allant de 2 à n-1, chaque élément d'ossature 11_i de rang i est fixé à la fois à un élément d'ossature de rang i-1 et à un élément d'ossature de rang i+1. Selon sa position, il pourra s'agir d'un élément d'ossature 10_i de la première configuration et/ou d'un élément d'ossature 11_i de la deuxième configuration.

L'élément d'ossature 10_n de rang n est assemblé avec l'élément d'ossature de rang n-1.

Chaque élément d'assemblage 12 peut se présenter sous la forme d'une pièce en forme de L pouvant être retournée à 180° autour de l'axe (X). L'élément d'assemblage 12 peut également présenter une section transversale en U, plus étroite que la section transversale en U d'un élément d'ossature 10_i, 11_i, mais ajustée pour pouvoir coulisser par rapport à celle-ci.

Dans un élément d'ossature, chaque élément d'assemblage 12 vient se loger dans l'espace creux formé par la section transversale en U, une branche 120 du L étant agencée en travers des deux longerons de l'élément d'ossature, formant une traverse, et l'autre branche étant agencée pour prolonger axialement l'un des deux longerons de l'élément d'ossature et lui conférer un organe d'assemblage 122 de type mâle.

Un élément d'ossature 10_i selon la première configuration comporte un seul élément d'assemblage 12. L'organe d'assemblage 122 de type mâle prolonge alors le premier longeron 100_i ou le deuxième longeron 101_i de l'élément d'ossature 10_i.

Pour n supérieur à 2 et i allant de 2 à n-1, chaque élément d'ossature 11_i de rang i, réalisé selon la deuxième configuration, comporte un premier élément d'assemblage 12 pour se fixer sur l'élément d'ossature de rang i-1 et un deuxième élément d'assemblage 12 pour se fixer avec l'élément d'ossature de rang i+1.

Chaque élément d'assemblage 12 peut être fixé par soudage sur son élément d'ossature ou par toute autre solution adaptée.

Lorsque n=2, l'organe d'assemblage 122 de type mâle qui est solidaire de l'élément d'ossature de rang 1 est aligné sur la première ligne d'assemblage L1 pour être assemblé à l'élément d'ossature de rang 2 et l'organe d'assemblage 122 de type mâle qui est solidaire de l'élément d'ossature de rang 2 est aligné sur la deuxième ligne d'assemblage L2 pour être assemblé sur l'élément d'ossature de rang 1.

Lorsque n est strictement supérieur à 2, pour chaque élément d'ossature 11_i d'un rang i, avec i allant de 2 à n-1, son premier organe d'assemblage 122 de type mâle est aligné sur la première ligne d'assemblage L1 pour être assemblé à l'élément d'ossature de rang i-1 et son deuxième organe d'assemblage 122 de type mâle est aligné sur la deuxième ligne d'assemblage L2 pour être assemblé à l'élément d'ossature de rang i+1.

Dans une même ligne d'assemblage, l'organe d'assemblage 122 de type mâle qui prolonge un longeron d'un premier élément d'ossature est destiné à venir s'insérer en coulissement dans un longeron de l'élément d'ossature adjacent.

Sur toute la longueur du socle, les organes d'assemblage 122 sont donc alignés en alternance sur la première ligne d'assemblage L1 et sur la deuxième ligne d'assemblage L2.

Le longeron d'un élément d'ossature qui ne porte pas l'organe d'assemblage de type mâle est destiné à former, par sa section configurée en U, l'organe d'assemblage de type femelle pour l'organe d'assemblage de type mâle de l'élément d'ossature adjacent auquel il doit être fixé.

Autrement dit, dans un même plan de jonction et d'assemblage entre un élément d'ossature de rang i et un élément d'ossature de rang i+1 (quel que soit leur configuration), un organe d'assemblage 122 de type mâle appartient à l'élément d'ossature de rang i et est positionné suivant la première ligne d'assemblage L1 et un autre organe d'assemblage 122 de type mâle appartient à l'élément d'ossature de rang i+1 et est positionné suivant la deuxième ligne d'assemblage L2. Au plan de jonction suivant le long du socle, c'est-à-dire pour l'assemblage de l'élément d'ossature i+1 avec l'élément d'ossature i+2, un organe d'assemblage 122 appartient à l'élément d'ossature de rang i+1 et est positionné suivant la première ligne d'assemblage L1 et un organe d'assemblage 122 appartient à l'élément d'ossature de rang i+2 et est positionné suivant la deuxième ligne d'assemblage L2.

Un élément d'ossature 11_i selon la deuxième configuration, selon la longueur Ltot du socle adoptée et selon le nombre d'éléments d'ossature présents dans l'installation, peut présenter l'un des agencements suivants :
- il peut être positionné entre deux éléments d'ossature de la première configuration ;
- il peut être positionné entre un élément d'ossature de la première configuration et un élément d'ossature de la deuxième configuration ;
- il peut être positionné entre deux éléments d'ossature de la deuxième configuration ;

Un élément d'ossature 10_i selon la première configuration, peut être retourné à 180° autour de l'axe (X) pour passer son organe d'assemblage 122 de type mâle d'une ligne d'assemblage L1 à l'autre ligne d'assemblage L2. Un élément d'ossature 11_i de la deuxième configuration peut également être retourné à 180° pour inverser le positionnement de ses deux organes d'assemblage 122 entre la première ligne d'assemblage L1 et la deuxième ligne d'assemblage L2.

Selon un aspect particulier de l'invention, les éléments d'ossature 10_i, 11_i peuvent être proposés en plusieurs largeurs, par exemple trois largeurs tels que 600mm, 800mm ou 1000mm. Ces valeurs sont bien entendu à comprendre de manière non limitative et toute autre largeur pourra être proposée.

Selon un aspect particulier de l'invention, l'élément d'ossature 10_i selon la première configuration peut être proposé en deux longueurs distinctes et l'élément d'ossature 11_i selon la deuxième configuration en une seule longueur.

Les longueurs proposées pour chaque élément d'ossature sont choisies de manière adaptée pour assurer une couverture la plus linéaire possible de longueurs de socle.

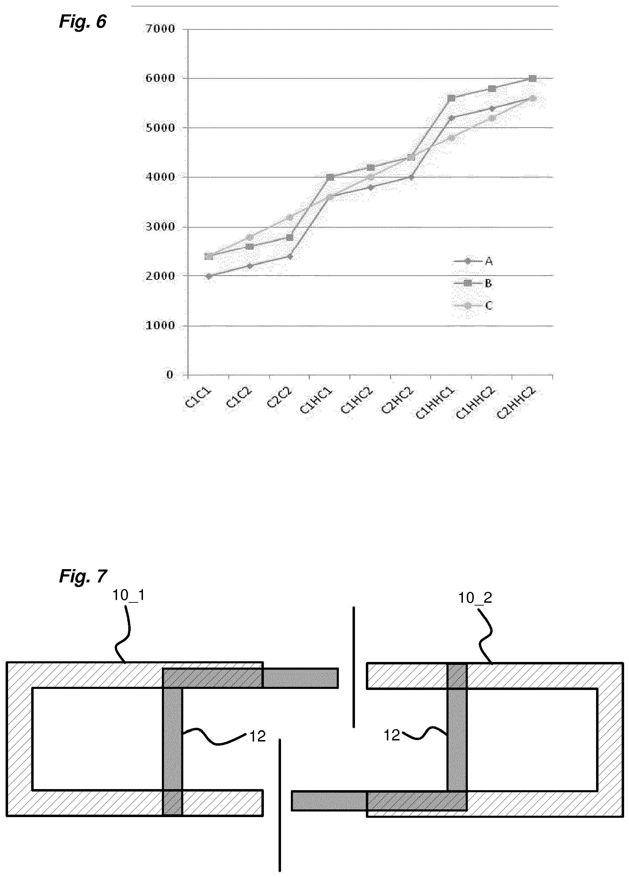

Le tableau ci-dessous, en liaison avec la courbe de la figure 6, permet de mieux comprendre cet aspect :

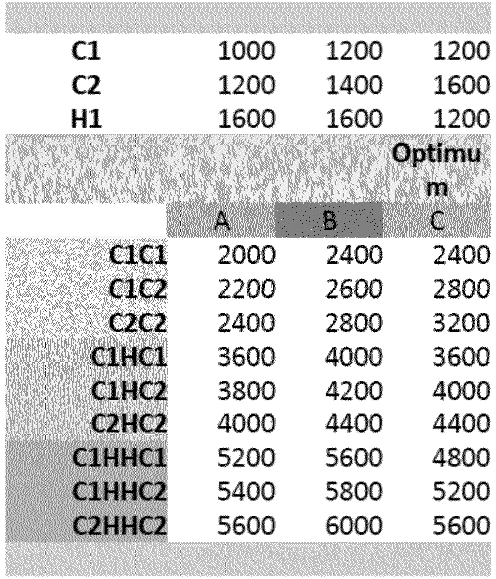

Dans ce tableau, C1 et C2 expriment deux longueurs proposées pour l'élément d'ossature 10_i de la première configuration décrite ci-dessus et H1 correspond à la longueur proposée pour l'élément d'ossature 11_i de la deuxième configuration. On comprend que dans le cas C, selon les différentes combinaisons proposées pour réaliser le socle, la gamme de longueurs proposées est mieux dispersée que dans les cas A et B. Cela ressort également du diagramme de la figure 6, sur lequel on peut voir que dans le cas C, l'augmentation de la longueur du socle suit une courbe linéaire alors que ce n'est pas le cas pour les cas A et B. il est donc préférable, mais non limitatif, de se placer dans le cas C pour choisir les longueurs des éléments d'ossature à proposer.

Bien entendu, même si le choix de ces longueurs présente un certain intérêt, il faut comprendre que d'autres longueurs pourraient être proposées.

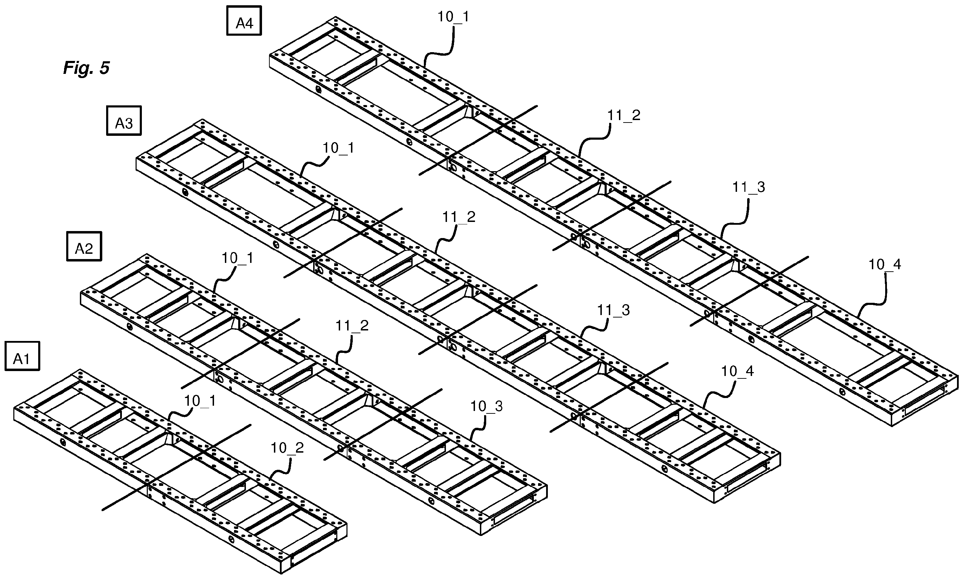

La figure 5 montre plusieurs configurations du socle de l'invention, se différenciant les unes des autres par une longueur Ltot distincte.

Dans l'architecture A1, le socle comporte deux éléments d'ossature 10_1, 10_2 de la première configuration fixés entre eux. En reprenant le tableau ci-dessus, il s'agit d'une architecture de type C1-C1.

Dans l'architecture A2, le socle comporte un premier élément d'ossature 10_1 d'extrémité de la première configuration, auquel est fixé un deuxième élément d'ossature 11_2 de la deuxième configuration, auquel est fixé un troisième élément d'ossature 10_3 d'extrémité de la première configuration. Il s'agit d'une architecture de type C1-H1-C1.

Dans l'architecture A3, le socle comporte un premier élément d'ossature 10_1 d'extrémité de la première configuration, auquel est fixé un deuxième élément d'ossature 11_2 de la deuxième configuration, auquel est fixé un troisième élément d'ossature 11_3 de la deuxième configuration, auquel est fixé un quatrième élément d'ossature 10_4 d'extrémité de la première configuration. Dans cette architecture, le quatrième élément d'ossature 10_4 est choisi avec une configuration allongée par rapport à celle de l'élément d'ossature utilisé au rang 1. Il s'agit d'une architecture de type C1-H1-H1-C2.

Dans l'architecture A4, le socle comporte un premier élément d'ossature 10_1 d'extrémité de la première configuration, auquel est fixé un deuxième élément d'ossature 11_2 de la deuxième configuration, auquel est fixé un troisième élément d'ossature 11_3 de la deuxième configuration, auquel est fixé un quatrième élément d'ossature 10_4 d'extrémité de la première configuration. Dans cette architecture, l'élément d'ossature 10_1 de rang 1 et l'élément d'ossature 10_4 de rang 4 sont choisis avec une configuration allongée. Cette architecture A4 est donc plus longue que l'architecture A3. Il s'agit d'une architecture de type C2-H1-H1-C2.

Toute autre architecture peut bien entendu être envisagée, en intercalant un ou plusieurs éléments d'ossature 11-i de la deuxième configuration supplémentaires.

Le socle de l'invention présente un niveau de rigidité et de solidité élevé, permis grâce à l'utilisation de plusieurs traverses réparties le long de sa longueur. Par ailleurs, comme illustré par la figure 7, la configuration qui consiste à alterner le positionnement des organes d'assemblage 122, suivant la première ligne d'assemblage L1 et suivant la deuxième ligne d'assemblage L2 à chaque nouveau plan de jonction, permet d'obtenir une architecture asymétrique, renforçant la rigidité de l'ensemble. Ce principe s'applique pour les autres éléments d'ossature ajoutés.

Les traverses peuvent comporter une ouverture axiale 13 pour former un passage pour les câbles ainsi que pour y insérer la fourche d'un chariot élévateur.

Les traverses peuvent également comporter une ouverture transversale 14 dans le sens de leur longueur pour y insérer des barres de transport. D'autres ouvertures transversales 15 peuvent également être formées pour y passer des barres de transport.

De manière non limitative, les éléments d'ossature peuvent être assemblés entre eux à l'aide de vis.

La solution de l'invention présente ainsi de nombreux avantages, parmi lesquels :
- Elle nécessite peu de pièces pour fabriquer le socle ;
- Elle est modulable en ce qu'elle permet facilement d'adapter la longueur totale du socle, par simple ajout ou retrait d'un ou plusieurs éléments d'ossature ;
- Elle nécessite peu de références de pièces pour mettre en œuvre une large gamme de longueurs de socle ;
- Elle est rigide et solide, notamment grâce à l'agencement particulier en alternance des éléments d'assemblage employés ;
- Elle est facile à installer, les éléments d'ossature étant insérés les uns dans les autres par leur organe d'assemblage puis fixés entre eux ;

## Revendications

1. Socle (1) pour enveloppe électrique (2), ledit socle étant de forme rectangulaire et composé de plusieurs éléments d'ossature (10_i, 11_i) assemblés entre eux, en vue de lui conférer une longueur (Ltot) réglable, chaque élément d'ossature peut prendre uniquement une première configuration ou une deuxième configuration, **caractérisé en ce que** ledit socle comporte :
- deux éléments d'ossature de ladite première configuration présents aux deux extrémités et **en ce que** chaque autre élément d'ossature est réalisé selon la deuxième configuration et est intercalé entre les deux éléments d'ossature d'extrémité pour régler ladite longueur dudit socle,
- une première série de plusieurs longerons mis bout-à-bout et assemblés les uns aux autres suivant une première ligne d'assemblage (L1) et une deuxième série de plusieurs longerons mis bout-à-bout et assemblés les uns aux autres suivant une deuxième ligne d'assemblage (L2), distincte de la première ligne d'assemblage et parallèle à celle-ci,
- plusieurs éléments d'assemblages (12) identiques, agencés pour assurer un assemblage de chaque élément d'ossature avec un élément d'ossature adjacent, chaque élément d'ossature comportant au moins un élément d'assemblage (12) fixé pour lui conférer un organe d'assemblage (122) de type mâle et agencé pour coopérer avec un organe d'assemblage de type femelle présent sur un élément d'ossature adjacent,
- les éléments d'ossature étant assemblés les uns aux autres de manière à assurer une alternance de positionnement des organes d'assemblage (122) suivant la première ligne d'assemblage (L1) et suivant la deuxième ligne d'assemblage (L2).

2. Socle selon la revendication 1, **caractérisé en ce qu'**un élément d'ossature (10_i) selon la première configuration comporte :
- Un premier longeron (100_i) et un deuxième longeron (101_i) identiques et parallèles entre eux, comprenant chacun une première extrémité et une deuxième extrémité,
- Une première traverse (102_i) joignant le premier longeron au deuxième longeron à leur première extrémité,
- Un élément d'assemblage (12) pour assurer un assemblage de l'élément d'ossature avec un élément d'ossature adjacent.

3. Socle selon la revendication 1, **caractérisé en ce qu'**un élément d'ossature (11_i) selon la deuxième configuration comporte :
- Un premier longeron (110_i) et un deuxième longeron (111_i) identiques et parallèles entre eux, comprenant chacun une première extrémité et une deuxième extrémité,
- Un premier élément d'assemblage (12) pour assurer un assemblage de l'élément d'ossature avec un premier élément d'ossature adjacent situé en amont,
- Un deuxième élément d'assemblage pour assurer un assemblage de l'élément d'ossature avec un deuxième élément d'ossature adjacent situé en aval.

4. Socle selon la revendication 2 ou 3, **caractérisé en ce que** chaque élément d'assemblage (12) présente une forme en L comportant une première branche agencée pour se fixer dans le prolongement de la première extrémité ou de la deuxième extrémité d'un longeron d'un élément d'ossature, selon la première configuration ou la deuxième configuration.

5. Socle selon l'une des revendications 1 à 4, **caractérisé en ce que** l'élément d'ossature (10_i) selon la première configuration est choisi parmi une architecture d'une première longueur et une architecture d'une deuxième longueur, distincte de la première longueur, et **en ce que** ces deux longueurs sont choisies pour permettre de couvrir plusieurs longueurs de socle suivant une progression linéaire.

6. Installation électrique comprenant plusieurs armoires électriques juxtaposées et un socle de support desdites armoires électriques, **caractérisée en ce que** le socle est tel que défini dans l'une des revendications 1 à 5, sa longueur (Ltot) étant réglée en fonction du nombre d'armoires électriques à juxtaposer.

## Patentansprüche

1. Sockel (1) für einen Schaltschrank (2), wobei der Sockel eine rechteckige Form aufweist und aus mehreren Rahmenelementen (10_i, 11_i) besteht, die miteinander verbunden sind, um ihm eine verstellbare Länge (Ltot) zu verleihen, wobei jedes Rahmenelement nur eine erste Konfiguration oder eine zweite Konfiguration annehmen kann, **dadurch gekennzeichnet, dass** der Sockel beinhaltet:
- zwei Rahmenelemente in der ersten Konfiguration, die sich an den beiden Enden befinden, und dass jedes andere Rahmenelement gemäß der zweiten Konfiguration ausgeführt ist und zwischen die beiden End-Rahmenelemente gesetzt ist, um die Länge des Sockels zu verstellen,
- eine erste Reihe aus mehreren Längsträgern, die Stoß an Stoß gesetzt sind und entlang einer ersten Verbindungslinie (L1) miteinander verbunden sind, und eine zweite Reihe aus mehreren Längsträgern, die Stoß an Stoß gesetzt sind und entlang einer zweiten Verbindungslinie (L2) miteinander verbunden sind, die von der ersten Verbindungslinie verschieden und parallel zu dieser ist,
- mehrere identische Verbindungselemente (12), die dazu gestaltet sind, eine Verbindung jedes Rahmenelements mit einem angrenzenden Rahmenelement zu gewährleisten, wobei jedes Rahmenelement mindestens ein Verbindungselement (12) umfasst, das befestigt ist, um ihm ein Verbindungsorgan (122) männlichen Typs zu verleihen, und dazu gestaltet ist, mit einem Verbindungsorgan weiblichen Typs zusammenzuwirken, das sich an einem angrenzenden Rahmenelement befindet,
- wobei die Rahmenelemente derart miteinander verbunden sind, dass eine abwechselnde Positionierung der Verbindungsorgane (122) entlang der ersten Verbindungslinie (L1) und entlang der zweiten Verbindungslinie (L2) gewährleistet ist.

2. Sockel nach Anspruch 1, **dadurch gekennzeichnet, dass** ein Rahmenelement (10_i) gemäß der ersten Konfiguration beinhaltet:
- einen ersten Längsträger (100_i) und einen zweiten Längsträger (101_i), die identisch und parallel zueinander sind und die jeweils ein erstes Ende und ein zweites Ende umfassen,
- einen ersten Querträger (102_i), der den ersten Längsträger mit dem zweiten Längsträger an ihrem ersten Ende zusammenfügt,
- ein Verbindungselement (12), um eine Verbindung des Rahmenelements mit einem angrenzenden Rahmenelement zu gewährleisten.

3. Sockel nach Anspruch 1, **dadurch gekennzeichnet, dass** ein Rahmenelement (11_i) gemäß der zweiten Konfiguration beinhaltet:
- einen ersten Längsträger (110_i) und einen zweiten Längsträger (111_i), die identisch und parallel zueinander sind und die jeweils ein erstes Ende und ein zweites Ende umfassen,
- ein erstes Verbindungselement (12), um eine Verbindung des Rahmenelements mit einem ersten vorgelagerten angrenzenden Rahmenelement zu gewährleisten,
- ein zweites Verbindungselement, um eine Verbindung des Rahmenelements mit einem zweiten nachgelagerten angrenzenden Rahmenelement zu gewährleisten.

4. Sockel nach Anspruch 2 oder 3, **dadurch gekennzeichnet, dass** jedes Verbindungselement (12) eine L-Form aufweist, die einen ersten Schenkel beinhaltet, der dazu gestaltet ist, in der Verlängerung des ersten Endes oder des zweiten Endes eines Längsträgers eines Rahmenelements gemäß der ersten Konfiguration oder der zweiten Konfiguration befestigt zu werden.

5. Sockel nach einem der Ansprüche 1 bis 4, **dadurch gekennzeichnet, dass** das Rahmenelement (10_i) gemäß der ersten Konfiguration unter einer Architektur mit einer ersten Länge und einer Architektur mit einer zweiten Länge, die von der ersten Länge verschieden ist, gewählt ist und dass diese beiden Längsträger so gewählt sind, dass ermöglicht wird, mehrere Sockellängen entlang einer linearen Progression abzudecken.

6. Elektrische Anlage, die mehrere aneinandergereihte Schaltschränke und einen Sockel zum Tragen dieser Schaltschränke umfasst, **dadurch gekennzeichnet, dass** der Sockel die Merkmale eines der Ansprüche 1 bis 5 aufweist, wobei seine Länge (Ltot) in Abhängigkeit von der Anzahl der aneinanderzureihenden Schaltschränke verstellt wird.

## Claims

1. Base (1) for an electrical cabinet (2), said base being rectangular in shape and consisting of multiple framework elements (10_i, 11_i) that are joined together such that it has an adjustable length (Ltot), each framework element being able to adopt only a first configuration or a second configuration, **characterized in that** said base comprises:
- two framework elements of said first configuration present at the two ends and **in that** each other framework element is created in the second configuration and is interposed between the two end framework elements so as to adjust said length of said base,
- a first set of multiple rails placed end-to-end and joined to one another along a first assembly line (L1) and a second set of multiple rails placed end-to-end and joined to one another along a second assembly line (L2) that is distinct from and parallel to the first assembly line,
- multiple assembly elements (12) that are identical and are arranged so as to join each framework element to an adjacent framework element, each framework element comprising at least one fixed assembly element (12) so as to have a male-type assembly member (122) arranged to cooperate with a female-type assembly member present on an adjacent framework element,
- the framework elements being joined to one another such that the positioning of the assembly members (122) alternates along the first assembly line (L1) and along the second assembly line (L2).

2. Base according to Claim 1, **characterized in that** a framework element (11_i) according to the first configuration comprises:
- a first rail (110_i) and a second rail (111_i) that are identical and mutually parallel, each comprising a first end and a second end,
- a first crosspiece (102_i) that connects the first rail to the second rail at their first end,
- an assembly element (12) for joining the framework element to an adjacent framework element.

3. Base according to Claim 1, **characterized in that** a framework element (10_i) according to the second configuration comprises:
- a first rail (100_i) and a second rail (101_i) that are identical and mutually parallel, each comprising a first end and a second end,
- a first assembly element (12) for joining the framework element to a first adjacent framework element located upstream,
- a second assembly element for joining the framework element to a second adjacent framework element located downstream.

4. Base according to Claim 2 or 3, **characterized in that** each assembly element (12) is in the shape of an L comprising a first leg that is arranged so as to be secured in the extension of the first end or of the second end of a rail of a framework element, according to the first configuration or the second configuration.

5. Base according to one of Claims 1 to 4, **characterized in that** the framework element (10_i) according to the first configuration is chosen from among an architecture having a first length and an architecture having a second length, which is different from the first length, and **in that** these two lengths are chosen so as to make it possible to cover multiple base lengths along a linear progression.

6. Electrical installation comprising multiple juxtaposed electrical enclosures and a base for supporting said electrical enclosures, **characterized in that** the base is as defined in one of Claims 1 to 5, its length (Ltot) being set in dependence on the number of electrical enclosures that are to be juxtaposed.
